# EUROPEAN PATENT APPLICATION

(11) **EP 1 128 139 A1**
(43) Date of publication of application: **29.08.2001**
(21) Application number: 00830136.8
(22) Date of filing: 24.02.2000
(51) Int. Cl.: F25D 15/00, B60H 1/00, B60P 3/20

(54) **Refrigerating system for refrigerator motor vehicles**

(71) Applicant: Zanotti S.p.A., 46020 Pegognaga MN (IT)
(72) Inventor: Zanotti Mario, 46029 Suzzara (Mantova) (IT); Zanotti Raffaele,, 46029 Suzzara (Mantova) (IT)
(74) Representative: Riccardi, Elisa

(57) **Abstract**

In a refrigerating system (10) for refrigerator motor vehicles, a coolant refrigeration cycle is provided by a refrigerating apparatus (20) and an on board refrigerating set (70), respectively provided with proper connectors (27, 29, 73, 75) suitable to seal coolant in the separate state of apparatus (20) and on board set (70). In this way, volume and weight are saved on the refrigerator motor vehicle (A), and they can be fully used for the commercial load.

## Description

The present invention relates to a refrigerating system for refrigerator motor vehicles.

Refrigerator motor vehicles are commonly used for transporting and distributing frozen and deep-frozen food, drugs, etcetera. Such motor vehicles are provided with a refrigerating room or isothermal box, for example obtained on the loading platform of the motor vehicle, provided with cold accumulator plates on its inner walls and on the ceiling. The cold accumulator plates normally contain an eutectic solution in which the evaporation coil of a coolant refrigerating set is submerged, the set being also housed on the loading platform or in the engine compartment of the motor vehicle.

When the motor vehicle is inoperative, the refrigerating set is connected to the mains and operated to lower the temperature, about -33°C, of the eutectic solution contained in the cold accumulator plates, this operation being also called "recharge". On the contrary, when the motor vehicle is traveling, the refrigerating set is turned off, and a temperature not higher than -20°C is retained in the isothermal box by the liquefying eutectic solution.

The refrigerating set has significant size and weight, which are subtracted from the loading capacity of the refrigerator motor vehicle. In fact, by way of example, one can consider that for a motor vehicle having a refrigerating room of about 20 m³, the refrigerating set takes a volume of about 0.7m³, and it has a weight of about 80-100 kg.

Thus, the technical problem underlying the present invention is to provide a refrigerating system for motor vehicles, which should minimise the share of loading capacity of the refrigerator motor vehicle subtracted by the refrigerating set.

Thus, in a first aspect thereof, the invention relates to an apparatus for the co-operation with a refrigerating set of a refrigerating room on board of a motor vehicle, having an evaporator, the apparatus having a casing intended to stand on the floor, and enclosing an open circuit for a coolant comprising: at least one inlet pipe for the coolant substantially in vapour state; a compressor; a condenser; and at least one outlet pipe for the coolant in the liquid state; wherein the at least one inlet pipe and outlet pipe are each provided with a connector suitable, during operation of the apparatus, to be connected to a complementary connector of said on board set and having fluid blocking means, wherein in a connection-free operating state, the fluid blocking means hermetically seals the respective pipe and, in a connection operating state, the fluid blocking means allows the flow of coolant.

In a second aspect thereof, the invention also relates to a refrigerating set of a refrigerating room on board of a motor vehicle for the co-operation with the above apparatus, comprising an open circuit for a coolant comprised of: at least one inlet pipe for the coolant substantially in the liquid state; an expansion device; an evaporator, the evaporator being in thermal contact with a cold accumulator medium of the refrigerating room to subtract heat from the cold accumulator medium for the coolant evaporation; and at least one outlet pipe for the coolant substantially in the vapour state; wherein the at least one inlet pipe and outlet pipe are each provided with a connector suitable to be connected to the complementary connector, of the at least one outlet pipe and inlet pipe of the refrigerating apparatus, respectively, and having fluid blocking means, wherein in a connection-free operating state, the fluid blocking means hermetically seals the respective pipe and, in a connection operating state, the fluid blocking means allow the flow of coolant.

In fact, by providing said apparatus and said on board set, many of the components of the refrigerating cycle need not be housed on the refrigerator motor vehicle; thus, the load can make full use of the available room and weight.

Preferably, both in the above apparatus and in the above on board set, each connector further has an operating state of pre-connection to the complementary connector, wherein the fluid blocking means hermetically seals the respective inlet/outlet pipe. In this way, coolant leakages and inlet of air in the inlet/outlet pipes, which may occur during the connection of connectors, are further prevented.

More preferably, both in the apparatus and in the on board set, each connector is provided with a respective removable cap for further closing the respective inlet/outlet pipe in the connection-free operating state. Said removable caps help preventing coolant leakages, and inlet of air in the inlet/outlet pipes, when the apparatus and the on board set are separate, and they keep the connectors clean, besides protecting them from damages due to accidental impacts.

Preferably, the casing of the above apparatus is provided with wheels.

Typically, in the above apparatus the coolant open circuit also comprises a liquid receiver, a dehydrator filter and/or a liquid flow sight glass downstream of the condenser.

Also, typically, the coolant open circuit also comprises an intake pressure regulator valve and/or a liquid separator upstream of the compressor.

Finally, the apparatus typically also comprises at least one fan for ventilating the condenser and/or the motor of the compressor.

Preferably, in the above on board set, the cold accumulator medium of the refrigerating room is an eutectic solution, and the evaporator is a coil submerged in the eutectic solution.

Finally, in a third aspect thereof, the invention relates to a refrigerating system for refrigerating rooms on board of motor vehicles, having at least one apparatus and one set as described. In fact, it is possible to use a single apparatus for the sequential use on more motor vehicles, or vice versa, use more apparatuses, typically located in different places along the transport/distribution route of the motor vehicle, for the same motor vehicle.

Further features and advantages of the present invention will now be illustrated with reference to embodiments depicted by way of not limitative example in the attached drawings, wherein:
- Figure 1 shows a perspective view of a refrigerating system for refrigerator motor vehicles according to the invention; and
- Figure 2 shows a block diagram of the refrigeration cycle of the refrigerating system of Figure 1.

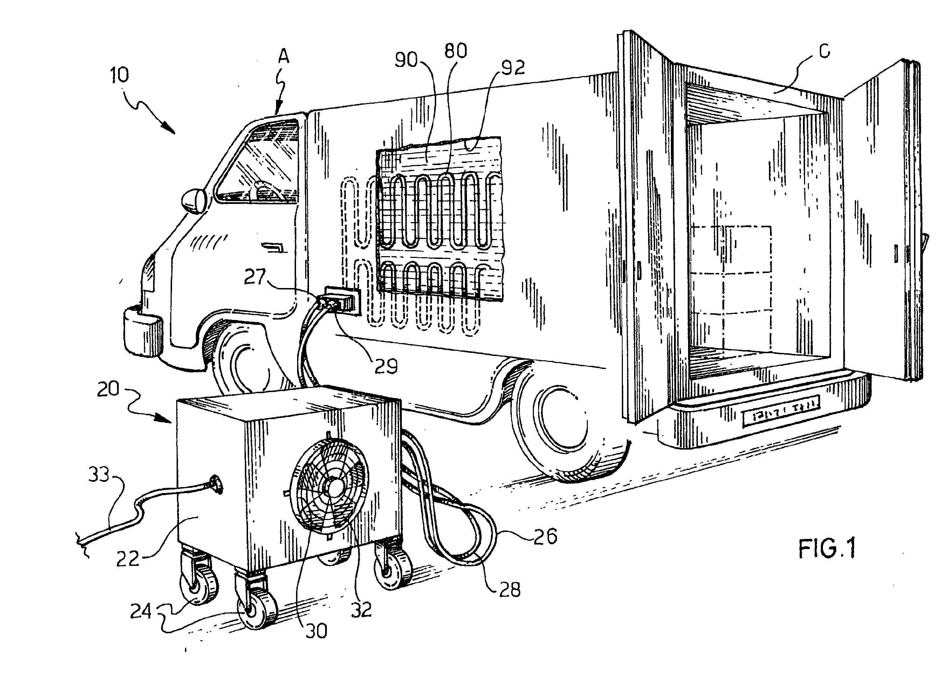

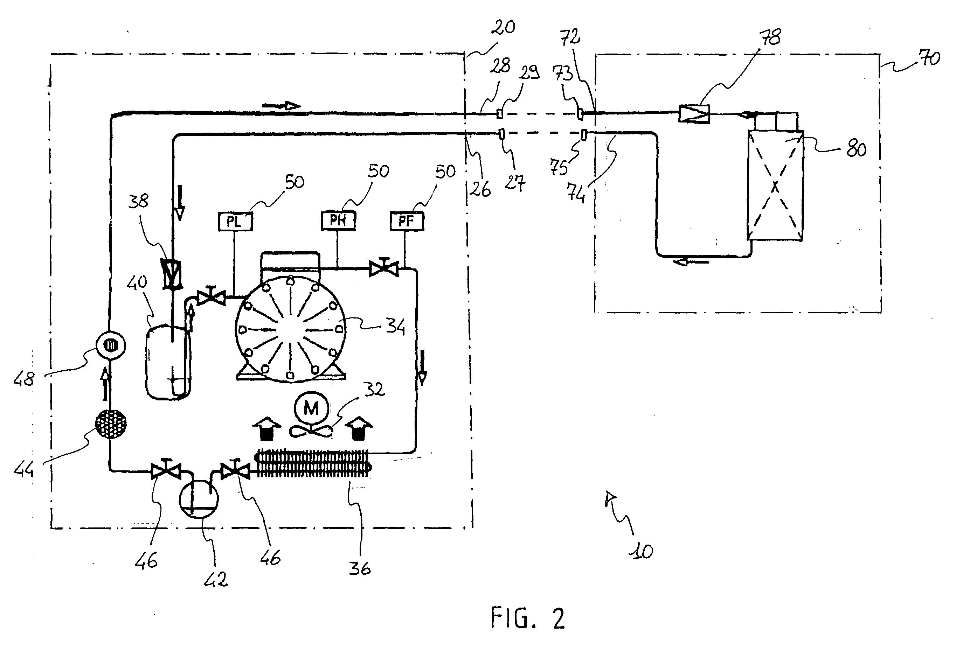

With reference to Figures 1 and 2, a refrigerating system 10 for refrigerating rooms on board of motor vehicles according to the present invention comprises a refrigerating apparatus 20 and a refrigerating set 70 for a refrigerating room C on board of a motor vehicle A.

The refrigerating apparatus 20 is provided with a casing 22, intended to stand on the floor, and preferably provided with wheels 24, from which at least one inlet pipe 26 and at least one outlet pipe 28 for a frigorific or coolant fluid come out. Moreover, at least one air intake (not shown), preferably on the bottom wall, and at least one air outlet 30 housing a fan 32 for cooling the internal components, are obtained into casing 22. Finally, at least one power supply cord 33 exits from casing 22.

The refrigerating apparatus 20 comprises a compressor 34 and a condenser 36, connected in an open circuit from the inlet pipe 26 to the outlet pipe 28 and suitable to form a refrigerating cycle when apparatus 20 is connected to the on board set 70, as explained more in detail hereafter.

Preferably, and as shown in Figure 2, the coolant open circuit of apparatus 20 also comprises a valve 38 for regulating the intake pressure, arranged along the inlet pipe 26, and a liquid separator 40 upstream of compressor 34, as well as a liquid receiver 42 and a dehydrator filter 44 arranged downstream of condenser 36, along the outlet pipe 28. In an even more preferred way, the circuit is also provided with shut-down valves 46 between the above components, and control means, such as a liquid flow sight glass 48 and pressure switches 50. In particular, a safety pressure switch PL for minimum pressure upstream of compressor 34, a safety pressure switch PH for maximum pressure downstream of the compressor, and a pressure switch PF for controlling the condensation pressure, are illustrated.

The on board set 70 comprises at least one inlet pipe 72 and at least one outlet pipe 74 for coolant, exiting from at least one hole 76 obtained in the wall of the refrigerating room C mounted on the bodywork of motor vehicle A. Connected in an open circuit from the inlet pipe 72 to the outlet pipe 74, the on board set 70 also comprises an expansion device 78 and an evaporator 80, suitable to form a refrigerating cycle with the elements of apparatus 20 when connected to the on board set 70, as explained more in detail hereafter.

Evaporator 80 typically is a coil submerged in a cold accumulator medium, for example an eutectic solution 90, which in turn is in thermal contact with the inner environment of the refrigerating room C. Typically, the eutectic solution 90 shall be apportioned into more enclosures 92 arranged along the inner walls and/or on the ceiling of the refrigerating room C, each crossed by a portion of the coil making up evaporator 80.

Apparatus 20 and on board set 70 are suitable to be hydraulically connected through connectors at the ends of the respective coolant inlet and outlet pipes. More in particular, apparatus 20 comprises at least one input connector 27 coupled to the end of its inlet pipe 26, and an output connector 29 coupled to the end of its outlet pipe 28, and the on board set 70 comprises at least one input connector 73 coupled to the end of its inlet pipe 72, and an output connector 75 coupled to the end of its outlet pipe 74.

The input connector 27 of apparatus 20 is suitable to be connected to the output connector 75 of the on board set 70, and the output connector 29 of apparatus 20 is suitable to be connected to the input connector 73 of the on board set 70. During operation of the refrigerating system 10 of the invention, in the connection operating state, connectors 27, 29, 73, 75 allow the flow of coolant through the respective pipes 26, 28, 72, 74, whereas in the connection-free operating state, they hermetically seal the respective pipe. The transition between said operating states must be such as to prevent, or at least minimise, the leakage of coolant and the inlet of air in the respective pipes. The fulfilment of this requirement can be further improved by providing connectors 27, 29, 73, 75 having an intermediate coupling state, or pre-connection operating state, wherein they are mechanically coupled, but they still hermetically seal the respective pipe 26, 28, 72, 74. Suitable connectors are, for example, represented by the male half and the female half of the coupling marketed under the trademark ConnectAire™ by Aeroquip, New Haven, IN, USA, and described in Aeroquip Engineering Bulletin of 3.18.97. Without entering here into details, said half couplings comprise a respective stem valve which is opened through a suitable lever after the mechanical coupling between the two half couplings. When they are separate, the two half couplings can be protected by a respective cap. Of course, it is possible to use other connectors having analogous functionality, for example whose blocking means of the coolant flow are comprised of different types of valves, shut-down valves, and so on.

When connectors 27, 29, 73, 75 are in the above two-by-two connection state, represented by the dashed lines of Figure 2, the elements of apparatus 20 and those of on board set 70 form, as a whole, a conventionally operating refrigeration cycle.

In fact, the coolant at liquid state evaporates in evaporator 80, subtracting heat from the cold accumulator medium or eutectic solution 90; the vaporised coolant exiting from evaporator 80 is compressed by compressor 34; the compressed vaporised coolant is sent to condenser 36, where it returns to the liquid state; the pressure of the liquid coolant is lowered in the expansion device 78; finally, the liquid coolant returns into evaporator 80 to complete the cycle. The liquid-receiver tank 42, when provided, contains the amount of coolant needed for accommodating the load variations to which the refrigeration-cycle set is subject. The provision of the liquid separator 40 allows keeping evaporator 80 flooded, and it allows a dry operation of compressor 34, which as known, increases the refrigerating effect, reduces the consumption of motor energy and facilitates adjustments. As said above; condenser 36 is cooled by the environmental air which is sucked in by the air intake (not shown) and expelled through outlet 30 by fan 32. Preferably, the arrangement within casing 22 of apparatus 20 is such that the same cooling air is also useful for cooling compressor 34. The latter preferably is a semi-hermetical compressor. By way of example, for a refrigerating room having a volume of about 20 m³, the estimated power at evaporation -40°C and condensation +45°C conditions is 2,300 W. The coolant used can be, for example, R404A (ASHRAE - American Society of Heating Refrigerating and Air Conditioning Engineers).

Thus, during the connection state described above, the eutectic solution 90 or other cold accumulator medium provided into the refrigerating room C of motor vehicle A is cooled to about -33°C, which for typical sizes of the set with respect to the refrigerating room, is equivalent to an internal temperature of the refrigerating room C of about -30°C. At the end of the "recharge", which typically occurs overnight, connectors 27, 29, 73, 75 are disconnected and the eutectic solution 90 slowly absorbs heat from the environmental air inside the refrigerating room C, maintaining therein a temperature not higher than - 20°C for about 10-12 hours. Thus, motor vehicle A is capable of transporting its load of frozen and deep-frozen food, drugs, and the like, without having to renounce a certain volume and a certain weight that are traditionally used by the refrigerating set.

When connectors 27, 29, 73, 75 are in the above connection-free state, they are preferably covered with a respective cap (not shown) for further closing the respective inlet/outlet pipe 26, 28, 72, 74 and keeping the connectors themselves clean.

Apparatus 20 and on board set 70 provided with connectors as described must not necessarily be provided, in a transport network, in one-to-one correspondence. In fact, it is possible to use a single apparatus 20 for the sequential use on more motor vehicles A on which an on board set 70 is mounted, or vice versa, use more apparatuses 20, typically located in different places along the transport/distribution route of the motor vehicle, for a same motor vehicle A.

Thus, a typical refrigerating system for refrigerating rooms on board of motor vehicles according to the present invention will be provided with at least one apparatus 20 and at least one on board set 70, as described.

## Claims

1. Apparatus (20) for the co-operation with a refrigerating set (70) of a refrigerating room (C) on board of a motor vehicle (A), having an evaporator (80), the apparatus (20) having a casing (22) intended to stand on the floor, and enclosing an open circuit for a coolant comprising: at least one inlet pipe (26) for the coolant substantially in vapour state; a compressor (34); a condenser (36); and at least one outlet pipe (28) for the coolant in the liquid state; wherein the at least one inlet pipe (26) and outlet pipe (28) are each provided with a connector (27, 29) suitable, during operation of the apparatus (20), to be connected to a complementary connector (73, 73) of said on board set (70) and having fluid blocking means, wherein in a connection-free operating state, the fluid blocking means hermetically seals the respective pipe (26, 28) and, in a connection operating state, said fluid blocking means allows the flow of coolant.

2. Apparatus (20) according to claim 1, characterized in that each of said connectors (27, 29) further has an operating state of pre-connection to the complementary connector, wherein the fluid blocking means hermetically seals the respective inlet/outlet pipe (26, 28).

3. Apparatus (20) according to claim 1 or 2, characterized in that each of said connectors (27, 29) is provided with a respective removable cap for further closing the respective inlet/outlet pipe (26, 28) in said connection-free operating state.

4. Apparatus (20) according to any one of the preceding claims, characterized in that said casing (22) is provided with wheels (24).

5. Apparatus (20) according to any one of the preceding claims, characterized in that said coolant open circuit also comprises a liquid receiver (42), a dehydrator filter (44) and/or a liquid flow sight glass (48) downstream of said condenser (36).

6. Apparatus (20) according to any one of the preceding claims, characterized in that said coolant open circuit also comprises an intake pressure regulator valve (38) and/or a liquid separator (40) upstream of said compressor (34).

7. Apparatus (20) according to any one of the preceding claims, characterized in that it further comprises at least one fan (32) for ventilating said condenser (36) and/or the motor of said compressor (34).

8. Refrigerating set (70) of a refrigerating room (C) on board of a motor vehicle (A) for the co-operation with the apparatus (20) of one of claims 1 to 7, comprising an open circuit for a coolant comprised of: at least one inlet pipe (72) for the coolant substantially in the liquid state; an expansion device (78); an evaporator (80), said evaporator being in thermal contact with a cold accumulator medium (90) of said refrigerating room (C) to subtract heat from said cold accumulator medium (90) for the coolant evaporation; and at least one outlet pipe (74) for the coolant substantially in the vapour state; wherein said at least one inlet pipe (72) and outlet pipe (74) are each provided with a connector (73, 75) suitable to be connected to the complementary connector (27, 29) of said at least one outlet pipe (26) and inlet pipe (28) of said refrigerating apparatus (20), respectively, and having fluid blocking means, wherein in a connection-free operating state, said fluid blocking means hermetically seals the respective pipe (72, 73) and, in a connection operating state, said fluid blocking means allows the flow of coolant.

9. On board set (70) according to claim 8, characterized in that each of said connectors (73, 75) further has an operating state of pre-connection to the complementary connector (27, 29), wherein said fluid blocking means hermetically seals the respective inlet/outlet pipe (72, 74).

10. On board set (70) according to claim 8 or 9, characterized in that each of said connectors (73, 75) is provided with a respective removable cap for further closing the respective inlet/outlet pipe (72, 74) in said connection-free operating state.

11. On board set (70) according to any one of claims 8 to 10, characterized in that said cold accumulator medium (90) of said refrigerating room (C) is an eutectic solution, and said evaporator (80) is a coil submerged in said eutectic solution.

12. Refrigerating system (10) for refrigerating rooms (C) on board of motor vehicles (A), having at least an apparatus (20) according to any one of claims 1 to 7 and at least an on board set (70) according to any one of claims 8 to 11.
